(19) Europäisches Patentamt
European Patent Office
Office européen des brevets

(11) **EP 4 704 353 A1**

(12) **EUROPEAN PATENT APPLICATION**

(43) Date of publication:
**04.03.2026 Bulletin 2026/10**

(21) Application number: **25198262.5**

(22) Date of filing: **26.08.2025**

(51) International Patent Classification (IPC):
***H04B 10/11*** *(2013.01)* ***H04B 10/564*** *(2013.01)*

(52) Cooperative Patent Classification (CPC):
**H04B 10/564; H04B 10/11**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH LA MA MD TN**

(30) Priority: **03.09.2024 US 202463689860 P**
**14.02.2025 TW 114105589**

(71) Applicant: **OptoMedia Technology Inc.**
**Zhubei Hsinchu 30273 (TW)**

(72) Inventors:
- **CHOU, Hui-Tsuo**
**30273 Zhubei (TW)**
- **HSU, Pei Hsiang**
**30273 Zhubei (TW)**

(74) Representative: **HGF**
**HGF Europe LLP**
**Neumarkter Straße 18**
**81673 München (DE)**

# (54) OPTICAL MODULE AND METHOD OF ADJUSTING OPTICAL POWER

(57) A method of adjusting an optical power includes: detecting an input optical power by an optical receiving device and detecting an output optical power by an optical transmitting device; determining whether the output optical power must be adjusted; calculating a bias current and a modulation current; and adjusting the output optical power according to the calculated bias current and the modulation current.

M
A
S201
Detecting an input optical power and an output optical power
S202
Determining whether the output optical power must be adjusted
No
Yes
S203
Calculating a bias current and a modulation current
S204
Adjusting the output optical power according to the bias current and the modulation current
A

Fig. 2

EP 4 704 353 A1

## Description

## BACKGROUND

Field of Invention

The present disclosure relates to an optical module and a method of adjusting optical power.

Description of Related Art

In modern optical communication systems, the performance of optical modules is crucial to the stability and efficiency of the overall system. Traditional optical modules are typically designed for fixed-distance communication and operate at a fixed power consumption level. However, when these optical modules are applied to medium- and short-distance communication, their output optical power remains constant and cannot be adjusted according to actual communication distance variations.

If an optical module could autonomously detect the communication distance and dynamically adjust the output optical power according to the distance, system performance would be significantly optimized. Such an adjustment would not only help reduce overall power consumption but also effectively lower system-end temperatures, thereby improving overall system performance and reliability.

Therefore, how to propose an optical module and a method of adjusting optical power that can solve the aforementioned problems is one of the problems that the industry is currently eager to invest in research and development resources to solve.

## SUMMARY

In view of this, one purpose of the present disclosure is to provide an optical module and a method of adjusting optical power that can solve the aforementioned problems.

In order to achieve the above objective, according to an embodiment of the present disclosure, a method of adjusting optical power includes: detecting an input optical power and an output optical power by an optical receiving device and an optical transmitting device, respectively; determining whether the output optical power must be adjusted; calculating a bias current and a modulation current; and adjusting the output optical power according to the bias current and the modulation current.

In one or more embodiments of the present disclosure, determining whether the output optical power must be adjusted further includes: determining whether the input optical power is greater than a receiving sensitivity.

In one or more embodiments of the present disclosure, if the input optical power is greater than the receiving sensitivity, the bias current and the modulation current are calculated.

In one or more embodiments of the present disclosure, if the input optical power is less than or equal to the receiving sensitivity, the input optical power and the output optical power are detected.

In one or more embodiments of the present disclosure, calculating the bias current and the modulation current further includes: calculating a first difference between the input optical power level related to the input optical power and the output optical power level related to the output optical power; calculating a targeted output optical power level by the first difference and the receiving sensitivity; calculating a second difference between the output optical power level and the targeted output optical power level; calculating the bias current by the second difference; and calculating the modulation current by the output optical power level and the targeted output optical power level.

In one or more embodiments of the present disclosure, if the input optical power level is less than a threshold, the optical transmitting device is shut down.

In one or more embodiments of the present disclosure, a sum of the bias current and the modulation current is positively correlated with the second difference.

In one or more embodiments of the present disclosure, adjusting the output optical power according to the bias current and the modulation current further includes: adjusting the output optical power level to the targeted output optical power level by the bias current and the modulation current.

In one or more embodiments of the present disclosure, detecting the input optical power and the output optical power further includes: converting the input optical power and the output optical power into an input optical power level and an output optical power level, respectively.

In one or more embodiments of the present disclosure, detecting the input optical power and the output optical power is performed after adjusting the output optical power according to the bias current and the modulation current.

In order to achieve the above objective, according to an embodiment of the present disclosure, an optical module includes an optical transmitting device, an optical receiving device, a signal processing unit, a communication interface, and a controlling and calculating unit. The optical transmitting device is configured to detect an output optical power. The optical receiving device is configured to detect an input optical power. The signal processing unit is connected to the optical transmitting device and the optical receiving device. The signal processing unit is configured to convert the output optical power and the input optical power into an output optical power level and an input optical power level, respectively. The communication interface is connected to the signal processing unit. The controlling and calculating unit is connected to the communication interface. The controlling and calculating unit is configured to: determine whether the output optical power must be adjusted; calculate a bias current and a modulation current according to the output optical power level and the input optical power level; and adjust the output optical power according to the bias current and the modulation current.

In one or more embodiments of the present disclosure, the controlling and calculating unit is further configured to shut down the optical transmitting device if the input optical power level is less than a threshold.

In one or more embodiments of the present disclosure, the controlling and calculating unit is further configured to: calculate a first difference between the input optical power level and the output optical power level; calculate a targeted output optical power level by the first difference and a receiving sensitivity; calculate a second difference between the output optical power level and the targeted output optical power level; calculate the bias current by the second difference; and calculate the modulation current by the output optical power level and the targeted output optical power level.

In one or more embodiments of the present disclosure, the controlling and calculating unit is further configured to: adjust the output optical power level to the targeted output optical power level by the bias current and the modulation current.

In one or more embodiments of the present disclosure, the controlling and calculating unit is further configured to: determine whether the input optical power is greater than a receiving sensitivity.

In summary, in the optical module and the method of adjusting optical power of the present disclosure, the controlling and calculating unit calculates the bias current and the modulation current and adjusts the output optical power accordingly. As a result, the output optical power of the optical module can be dynamically adjusted, so as to reduce power consumption, thereby improving system performance and reliability.

It is to be understood that both the foregoing general description and the following detailed description are by examples, and are intended to provide further explanation of the invention as claimed.

## BRIEF DESCRIPTION OF THE DRAWINGS

The invention can be more fully understood by reading the following detailed description of the embodiment, with reference made to the accompanying drawings as follows:

Fig. 1 is a functional block diagram of an optical module in accordance with an embodiment of the present disclosure; and

Fig. 2 is a flow chart of a method of adjusting optical power in accordance with an embodiment of the present disclosure.

## DETAILED DESCRIPTION

Hereinafter, a plurality of embodiments of the present disclosure will be disclosed in diagrams. For the sake of clarity, many details in practice will be described in the following description. However, it should be understood that these details in practice should not limit present disclosure. In other words, in some embodiments of present disclosure, these details in practice are unnecessary. In addition, for simplicity of the drawings, some conventionally used structures and elements will be shown in a simple schematic manner in the drawings. The same reference numbers are used in the drawings and the description to refer to the same or like parts.

Hereinafter, the structure and function of each component included in an optical module 100 of this embodiment and the connection relationship between the components will be described in detail.

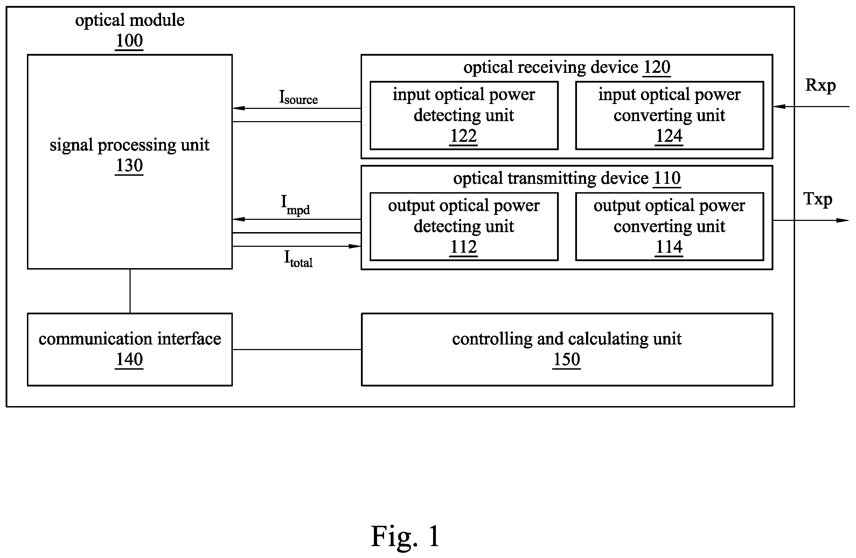

Reference is made to Fig. 1. Fig. 1 is a functional block diagram of an optical module in accordance with an embodiment of the present disclosure. As shown in Fig. 1, in this embodiment, the optical module 100 includes an optical transmitting device 110, an optical receiving device 120, a signal processing unit 130, a communication interface 140, and a controlling and calculating unit 150. The optical transmitting device 110 is connected to the signal processing unit 130. The optical transmitting device 110 includes an output optical power detecting unit 112 and an output optical power converting unit 114. The output optical power detecting unit 112 is configured to detect an output optical power Txp. The output optical power converting unit 114 is configured to convert the output optical power Txp into an output optical current $I_{mpd}$. The optical receiving device 120 is connected to the signal processing unit 130. The optical receiving device 120 includes an input optical power detecting unit 122 and an input optical power converting unit 124. The input optical power detecting unit 122 is configured to detect an input optical power Rxp. The input optical power converting unit 124 is configured to convert the input optical power Rxp into an input optical current $I_{source}$. The signal processing unit 130 is connected to the optical transmitting device 110, the optical receiving device 120, and the communication interface 140. The signal processing unit 130 is configured to convert the output optical power Txp and the input optical power Rxp into an output optical power level (transmit power level) and an input optical power level (receive power level), respectively. Specifically, the signal processing unit 130 converts the output optical current $I_{mpd}$ and the input optical current $I_{source}$ into the output optical power level and the input optical power level, respectively. The communication interface 140 is connected to the signal processing unit 130 and the controlling and calculating unit 150. The controlling and calculating unit 150 reads signals from the signal processing unit 130 via the communication interface 140. The controlling and calculating unit 150 is configured to adjust the output optical power Txp according to a driving current $I_{total}$. Specifically, the driving current $I_{total}$ is a sum of a bias current and a modulation current. Accordingly, the controlling and calculating unit 150 is configured to adjust the output optical power Txp according to the bias current and the modulation current.

In some embodiments, the optical transmitting device 110 may be a transmitting optical sub-assembly (TOSA).

In some embodiments, the optical receiving device 120 may be a receiving optical sub-assembly (ROSA).

In some embodiments, the signal processing unit 130 may be a device configured to perform digital diagnostic monitoring (DDM) technology.

In some embodiments, the communication interface 140 may adopt, for example, an Inter-Integrated Circuit ($I^2C$) protocol.

In some embodiments, the controlling and calculating unit 150 may be a microcontroller unit (MCU) or another processing unit.

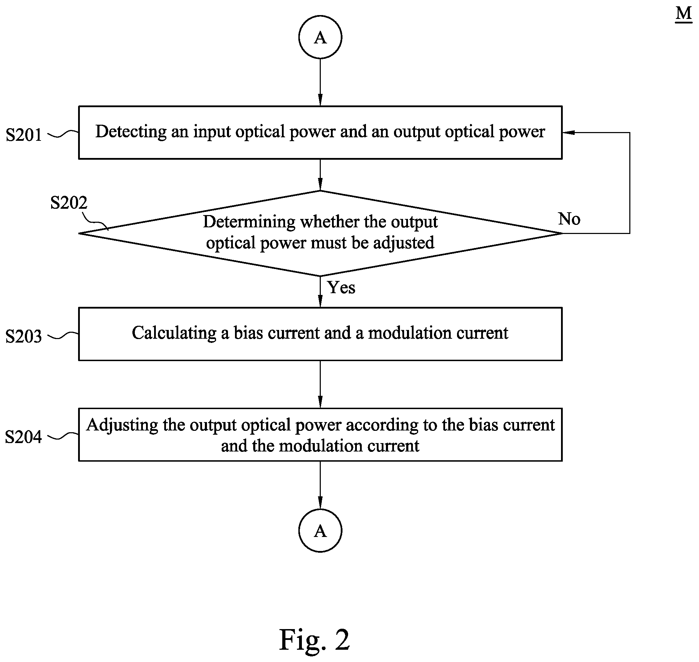

Reference is made to Fig. 2. Fig. 2 is a flow chart of a method M of adjusting optical power according to one embodiment of the present disclosure. As shown in Fig. 2, the method M includes step S201, step S202, step S203, and step S204. The following sections provide a detailed description of step S201, step S202, step S203, and step S204.

Step S201: Detecting the input optical power Rxp and the output optical power Txp.

In this embodiment, the optical module 100 detects the input optical power Rxp and the output optical power Txp. Specifically, the output optical power detecting unit 112 of the optical transmitting device 110 detects the output optical power Txp of current transmitted light, and the input optical power detecting unit 122 of the optical receiving device 120 detects the input optical power Rxp of current received light. The SI unit of the output optical power Txp and the input optical power Rxp is watt (W). Generally, the commonly used unit for the output optical power Txp and the input optical power Rxp is milliwatt (mW) or microwatt (μW).

In this embodiment, step S201 further includes converting the input optical power Rxp and the output optical power Txp into an input optical power level and an output optical power level, respectively. Specifically, the signal processing unit 130 converts the output optical power Txp and the input optical power Rxp into the output optical power level and the input optical power level, respectively. More specifically, the output optical power converting unit 114 converts the output optical power Txp into the output optical current $I_{mpd}$, and the input optical power converting unit 124 converts the input optical power Rxp into the input optical current $I_{source}$. Subsequently, the signal processing unit 130 converts the output optical current $I_{mpd}$ and the input optical current $I_{source}$ into the output optical power level and the input optical power level, respectively. The SI unit for the output optical power level and the input optical power level is decibel (dB). Generally, the commonly used unit for the output optical power level and the input optical power level is decibel relative to one milliwatt (dBm).

Step S202: Determining whether the output optical power Txp must be adjusted.

In this embodiment, the optical module 100 must determine whether the output optical power Txp needs to be adjusted. Adjusting the output optical power Txp unnecessarily if no adjustment is needed will result in unnecessary energy consumption. Specifically, the controlling and calculating unit 150 determines whether the input optical power Rxp is greater than a receiving sensitivity. In step S202, if the controlling and calculating unit 150 determines that the input optical power Rxp is greater than the receiving sensitivity, step S203 is performed. On the contrary, if the controlling and calculating unit 150 determines that the input optical power Rxp is less than or equal to the receiving sensitivity, step S201 is performed (i.e., the input optical power Rxp and output optical power Txp continue to be detected). This ensures that the optical module 100 adjusts the output optical power Txp only in relatively energy-consuming situations, thereby reducing the power consumption of the optical module 100.

Step S203: Calculating the bias current and the modulation current.

In this embodiment, when the controlling and calculating unit 150 determines that the output optical power Txp must be adjusted, the controlling and calculating unit 150 then calculates the bias current and the modulation current. In some embodiments, if the controlling and calculating unit 150 determines that the input optical power Rxp is greater than the receiving sensitivity, the controlling and calculating unit 150 calculates the bias current and the modulation current. The optical module 100 can adjust the output optical power Txp by the bias current and the modulation current. In some embodiments, the step of calculating the bias current and the modulation current (i.e., step S203) further includes multiple sub-steps, which are detailed below.

Step (A): Calculating a first difference between the input optical power level related to the input optical power Rxp

and the output optical power level related to the output optical power Txp.

**In** this embodiment, the step of calculating the bias current and the modulation current (i.e., step S203) includes a step of calculating a first difference between the input optical power level and the output optical power level. Specifically, the input optical power level is related to the input optical power Rxp, and the output optical power level is related to the output optical power Txp. More specifically, after the signal processing unit 130 converts the output optical current $I_{mpd}$ and the input optical current $I_{source}$ into the output optical power level and the input optical power level in step S201, the controlling and calculating unit 150 calculates the first difference between the input optical power level and the output optical power level. In some embodiments, the aforementioned first difference can be obtained via the following equation (1).

$$DDM_{Rxp} - DDM_{Txp\,1} = Diff1 \ldots (1)$$

Where $DDM_{Rxp}$ represents the input optical power level, $DDM_{Txp1}$ represents the current output optical power level, and Diff1 represents the first difference. By the aforementioned equation (1), the energy ratio difference between the received power and the transmitting power of the optical module 100 can be obtained.

In a usage scenario, for example, if the signal processing unit 130 converts the input optical power Rxp and the output optical power Txp into an input optical power level (DDM_Rxp) of -15 dBm and an output optical power level (DDM_Txp1) of -5 dBm in step S201, respectively, then the controlling and calculating unit 150 can calculate the first difference between the input optical power level and the output optical power level as -10 dBm by the equation (1).

Step (B): Calculating a targeted output optical power level according to the first difference and the receiving sensitivity.

In this embodiment, the step of calculating the bias current and the modulation current (i.e., step S203) includes a step of calculating the targeted output optical power level according to the first difference and the receiving sensitivity. The receiving sensitivity represents a lowest limit of the input optical power Rxp that the optical receiving device 120 can correctly interpret. More specifically, after the controlling and calculating unit 150 calculates the first difference between the input optical power level and the output optical power level in step (A), the controlling and calculating unit 150 then calculates the targeted output optical power level by the first difference and the receiving sensitivity. In some embodiments, the targeted output optical power level can be obtained via the following equation (2).

$$Rxp_{sen} - Diff1 = DDM_{Txp\,2} \ldots (2)$$

Where $Rxp_{sen}$ represents the receiving sensitivity, Diff1 represents the first difference, and $DDM_{Txp2}$ represents the targeted output optical power level. By the aforementioned equation (2), the actual required transmitting power of the optical module 100 can be obtained. The targeted output optical power level considers signal attenuation during transmission to ensure that the receiving end (not shown) can correctly receive the signals.

In a usage scenario, for example, if the controlling and calculating unit 150 calculates the first difference (Diff1) as -10 dBm in step (A) of step S203, then the controlling and calculating unit 150 can subtract the first difference (Diff1) from the receiving sensitivity ($Rxp_{sen}$) to obtain the targeted output optical power level ($DDM_{Txp2}$) as -11 dBm by the equation (2). This means that the controlling and calculating unit 150 needs to adjust the output optical power Txp from -5 dBm to -11 dBm.

Step (C): Calculating a second difference between the output optical power level and the targeted output optical power level.

In this embodiment, the step of calculating the bias current and the modulation current (i.e., step S203) includes a step of calculating the second difference between the output optical power level and the targeted output optical power level. More specifically, after the controlling and calculating unit 150 calculates the targeted output optical power level in step (B), the controlling and calculating unit 150 then calculates the second difference between the output optical power level and the targeted output optical power level. In some embodiments, the second difference can be obtained via the following equation (3).

$$DDM_{Txp\,2} - DDM_{Txp\,1} = Diff2 = \Delta Txp \ldots (3)$$

Where $DDM_{Txp2}$ represents the targeted output optical power level, $DDM_{Txp1}$ represents the current output optical power level, Diff2 represents the second difference, and $\Delta$Txp represents the adjustment amount that the controlling and calculating unit 150 needs to make to the output optical power Txp. By the aforementioned equation (3), the actual amount by which the output optical power Txp must be adjusted can be obtained.

In a usage scenario, for example, if the controlling and calculating unit 150 calculates the targeted output optical power level ($DDM_{Txp2}$) as -11 dBm in step (B) of step S203, then the controlling and calculating unit 150 can subtract the current output optical power level ($DDM_{Txp1}$) from the targeted output optical power level ($DDM_{Txp2}$) and calculate the second difference (Diff2) as -6 dBm by the equation (3). This means that the controlling and calculating unit 150 needs to adjust the output optical power Txp by -6 dBm if the controlling and calculating unit 150 attempts to adjust the output optical power Txp from -5 dBm to -11 dBm.

Step (D): Calculating the bias current by the second difference.

In this embodiment, the step of calculating the bias current and the modulation current (i.e., step S203) includes a step of calculating the bias current by the second difference. More specifically, after the controlling and calculating unit 150 calculates the second difference (Diff2) in step (C), the controlling and calculating unit 150 calculates the bias current by the second difference. In some embodiments, the bias current can be calculated via the following equation (4).

$$m = \frac{\Delta Txp}{\Delta I_{bias}} = \frac{Diff2}{\Delta I_{bias}} = \frac{DDM_{Txp\,2} - DDM_{Txp\,1}}{\Delta I_{bias}} \left(\frac{dBm}{mA}\right) \ldots (4)$$

Where m represents the slope, and $\Delta I_{bias}$ represents the bias current. From the equation (4), it can be seen that there is a linear relationship between the second difference (Diff2) and the bias current ($\Delta I_{bias}$). By the equation (4), the amount of the bias current ($\Delta I_{bias}$) that the optical module 100 needs to generate when the adjustment amount for the output optical power Txp is -6 dBm can be obtained.

In a usage scenario, for example, the linear relationship between the adjustment amount that the controlling and calculating unit 150 needs to make to the output optical power Txp ($\Delta$Txp) and the bias current can be obtained in advance by testing the optical module 100 (e.g., obtaining the value of the slope m). Then, if the second difference (Diff2) (i.e., the adjustment amount that the controlling and calculating unit 150 needs to make to the output optical power Txp ($\Delta$Txp)) to be adjusted by the controlling and calculating unit 150) calculated by the controlling and calculating unit 150 in step (C) of step S203 is -6 dBm, the controlling and calculating unit 150 can divide the second difference (Diff2) by the slope (m) via the equation (4) to obtain the bias current ($\Delta I_{bias}$).

Step (E): Calculating the modulation current by the output optical power level and the targeted output optical power level.

In this embodiment, the step of calculating the bias current and the modulation current (i.e., step S203) includes a step of calculating the modulation current by the output optical power level and the targeted output optical power level. More specifically, after the controlling and calculating unit 150 calculates the second difference (Diff2) (i.e., the adjustment amount that the controlling and calculating unit 150 needs to make to the output optical power Txp ($\Delta$Txp)) in step (C), the controlling and calculating unit 150 calculates the modulation current by the output optical power level and the targeted output optical power level. In some embodiments, step (D) and step (E) are performed simultaneously after step (C). In some embodiments, step (E) is performed after step (D). In some other embodiments, after step (C) is performed, step (D) is performed, and then performing step (E). In some embodiments, the bias current can be calculated by the following equation (5), equation (6), and equation (7).

$$I_{mon\,1} = K \times DDM_{Txp\,1} \ldots (5)$$

$$I_{mon\,2} = K \times DDM_{Txp\,2} \ldots (6)$$

$$I_{mon\,2} - I_{mon\,1} = K \times \left(DDM_{Txp\,2} - DDM_{Txp\,1}\right) = \Delta I_{mon} \ldots (7)$$

Where K represents a constant, $I_{mon1}$ represents a current modulation current, $I_{mon2}$ represents a targeted modulation current, and $\Delta I_{mon}$ represents the modulation current. From the equation (5) to the equation (7), it can be seen that there is a linear relationship between the current output optical power level ($DDM_{Txp1}$) and the current modulation current ($I_{mon1}$), and similarly, there is a linear relationship between the targeted output optical power level ($DDM_{Txp2}$) and the targeted modulation current ($I_{mon2}$). By the equation (5) to the equation (7), the amount of the modulation current ($\Delta I_{mon}$) that the optical module 100 needs to generate when the adjustment amount for the output optical power Txp is -6 dBm can be obtained.

In a usage scenario, for example, the linear relationship between the current output optical power level ($DDM_{Txp1}$) and the current modulation current ($I_{mon1}$), as well as the linear relationship between the targeted output optical power level ($DDM_{Txp2}$) and the targeted modulation current ($I_{mon2}$), can be obtained in advance by testing the optical module 100 (e.g., obtaining the value of the constant K). Then, if the second difference (Diff2) (i.e., the adjustment amount that the controlling and calculating unit 150 needs to make to the output optical power Txp ($\Delta$Txp)) calculated by the

controlling and calculating unit 150 in step (C) of step S203 is -6 dBm, the controlling and calculating unit 150 can calculate the modulation current ($\Delta I_{mon}$) by multiplying the difference between the output optical power level and the targeted output optical power level ($DDM_{Txp2}$ - $DDM_{Txp1}$) by the constant (K) via the equation (5) to the equation (7).

Step S204: Adjusting the output optical power Txp according to the bias current and the modulation current.

In this embodiment, the optical module 100 adjusts the output optical power Txp according to the bias current ($\Delta I_{bias}$) and modulation current ($\Delta I_{mon}$). Specifically, the controlling and calculating unit 150 adjusts the output optical power Txp according to the bias current and the modulation current. In some embodiments, adjusting the output optical power Txp according to the bias current and the modulation current further includes adjusting the output optical power level to the targeted output optical power level by the bias current and the modulation current. In some embodiments, step S204 is performed after step S203. In some embodiments, the relationship among the bias current, the modulation current, and the output optical power Txp can be expressed by the following equation (8).

$$Diff2 = \Delta Txp \propto (\Delta I_{bias} + \Delta I_{mon}) = I_{total} \ \dots (8)$$

Where $I_{total}$ represents a driving current. From the equation (8), it can be seen that the driving current $I_{total}$ is positively correlated with the second difference (Diff2). That is, a sum of the bias current ($\Delta I_{bias}$) and the modulation current ($\Delta I_{mon}$) is positively correlated with the second difference (Diff2). Therefore, the optical module 100 adjusts the current output optical power level ($DDM_{Txp1}$) to the targeted output optical power level ($DDM_{Txp2}$) by simultaneously adjusting both the bias current ($\Delta I_{bias}$) and the modulation current ($\Delta I_{mon}$).

In a usage scenario, for example, if the controlling and calculating unit 150 calculates the bias current ($\Delta I_{bias}$) and the modulation current ($\Delta I_{mon}$) in step (D) and step (E) of step S203, the controlling and calculating unit 150 can adjust the current output optical power level ($DDM_{Txp1}$) to the targeted output optical power level ($DDM_{Txp2}$) in step S204 by the calculated bias current ($\Delta I_{bias}$) and the modulation current ($\Delta I_{mon}$). For example, the controlling and calculating unit 150 can adjust the output optical power Txp from -5 dBm to -11 dBm by the driving current $I_{total}$.

In some embodiments, the step of detecting the input optical power Rxp and the output optical power Txp (i.e., step S201) is performed after the step of adjusting the output optical power Txp according to the bias current and the modulation current (i.e., step S204). Specifically, once the controlling and calculating unit 150 has completed adjusting the output optical power Txp by both the bias current and the modulation current, the optical receiving device 120 and the optical transmitting device 110 continue to detect the input optical power Rxp and the output optical power Txp.

Reference is made again to Fig. 2. In another embodiment of the present disclosure, the method M of adjusting optical power further includes shutting down the optical transmitting device 110 when the input optical power level is below a threshold. Specifically, if the controlling and calculating unit 150 determines that the input optical power level is below the threshold, the controlling and calculating unit 150 will shut down the optical transmitting device 110. In some embodiments, the threshold can be any value. For example, the threshold can be equal to the receiving sensitivity ($Rxp_{sen}$). In this case, if the controlling and calculating unit 150 determines that the input optical power level is below the receiving sensitivity, the controlling and calculating unit 150 will shut down the optical transmitting device 110. That is, when the controlling and calculating unit 150 determines that the output optical power Txp does not need to be adjusted in step S202, it will shut down the optical transmitting device 110. This can reduce unnecessary power consumption of the optical module 100.

In some embodiments, the method M of adjusting optical power further includes turning on the optical transmitting device 110 when the input optical power level is greater than or equal to the threshold. Specifically, if the controlling and calculating unit 150 determines that the input optical power level is greater than the threshold, the controlling and calculating unit 150 will turn on the optical transmitting device 110. In this case, if the controlling and calculating unit 150 determines that the input optical power level is greater than the threshold, the controlling and calculating unit 150 will turn on the optical transmitting device 110. This allows the optical module 100 to switch from sleep mode to active mode immediately.

By performing the method M shown in Fig. 2 of the present disclosure, the output optical power Txp of the optical module 100 can be dynamically adjusted to reduce overall system energy consumption for communication over varying distances.

From the above detailed description of the specific embodiments of the present disclosure, it can be clearly seen that in the optical module and the method of adjusting optical power of the present disclosure, the controlling and calculating unit calculates the bias current and the modulation current and adjusts the output optical power accordingly. As a result, the optical module can dynamically adjust its output optical power, reducing power consumption and improving system performance and reliability.

## Claims

1. A method (M) of adjusting optical power, comprising:

   detecting an input optical power (Rxp) and an output optical power (Txp) by an optical receiving device (120) and an optical transmitting device (110), respectively (S201);
   determining whether the output optical power (Txp) must be adjusted (S202);
   calculating a bias current ($\Delta I_{bias}$) and a modulation current ($\Delta I_{mon}$) (S203); and
   adjusting the output optical power (Txp) according to the bias current ($\Delta I_{bias}$) and the modulation current ($\Delta I_{mon}$) (S204).

2. The method (M) of claim 1, wherein determining whether the output optical power (Txp) must be adjusted (S202) further comprises:
   determining whether the input optical power (Rxp) is greater than a receiving sensitivity ($Rxp_{sen}$).

3. The method (M) of claim 2, wherein:
   calculating the bias current ($\Delta I_{bias}$) and the modulation current ($\Delta I_{mon}$) if the input optical power (Rxp) is greater than the receiving sensitivity ($Rxp_{sen}$).

4. The method (M) of claim 2, wherein:
   detecting the input optical power (Rxp) and the output optical power (Txp) if the input optical power (Rxp) is less than or equal to the receiving sensitivity ($Rxp_{sen}$).

5. The method (M) of any of claims 1 to 4, wherein calculating the bias current ($\Delta I_{bias}$) and the modulation current ($\Delta I_{mon}$) (S203) further comprises:

   calculating a first difference (Diff1) between an input optical power level (DDM_Rxp) related to the input optical power (Rxp) and an output optical power level (DDM_Txp1) related to the output optical power (Txp);
   calculating a targeted output optical power level (DDM_Txp2) by the first difference (Diff1) and a receiving sensitivity ($Rxp_{sen}$);
   calculating a second difference (Diff2) between the output optical power level (DDM_Txp1) and the targeted output optical power level (DDM_Txp2);
   calculating the bias current ($\Delta I_{bias}$) by the second difference (Diff2); and
   calculating the modulation current ($\Delta I_{mon}$) by the output optical power level (DDM_Txp1) and the targeted output optical power level (DDM_Txp2).

6. The method (M) of any of claims 1-5, wherein:
   shutting down the optical transmitting device (110) if the input optical power level (DDM_Rxp) is less than a threshold.

7. The method (M) of claim 5 or 6, wherein a sum of the bias current ($\Delta I_{bias}$) and the modulation current ($\Delta I_{mon}$) is positively correlated with the second difference (Diff2).

8. The method (M) of any of claims 5 to 7, wherein adjusting the output optical power (Txp) according to the bias current ($\Delta I_{bias}$) and the modulation current ($\Delta I_{mon}$) (S204) further comprises:
   adjusting the output optical power level (DDM_Txp1) to the targeted output optical power level (DDM_Txp2) by the bias current ($\Delta I_{bias}$) and the modulation current ($\Delta I_{mon}$).

9. The method (M) of any of claims 1 to 8, wherein detecting the input optical power (Rxp) and the output optical power (Txp) (S201) further comprises:
   converting the input optical power (Rxp) and the output optical power (Txp) into an input optical power level (DDM_Rxp) and an output optical power level (DDM_Txp1), respectively.

10. The method (M) of any of claims 1 to 9, wherein detecting the input optical power (Rxp) and the output optical power (Txp) (S201) is performed after adjusting the output optical power (Txp) according to the bias current ($\Delta I_{bias}$) and the modulation current ($\Delta I_{mon}$) (S204).

11. An optical module (100), comprising:

an optical transmitting device (110) configured to detect an output optical power (Txp);
an optical receiving device (120) configured to detect an input optical power (Rxp);
a signal processing unit (130) connected to the optical transmitting device (110) and the optical receiving device (120) and configured to convert the output optical power (Txp) and the input optical power (Rxp) into an output optical power level (DDM_Txp1) and an input optical power level (DDM_Rxp), respectively;
a communication interface (140) connected to the signal processing unit (130); and
a controlling and calculating unit (150) connected to the communication interface (140) and configured to:

determine whether the output optical power (Txp) must be adjusted;
calculate a bias current ($\Delta I_{bias}$) and a modulation current ($\Delta I_{mon}$) according to the output optical power level (DDM_Txp1) and the input optical power level (DDM_Rxp); and
adjust the output optical power (Txp) according to the bias current ($\Delta I_{bias}$) and the modulation current ($\Delta I_{mon}$).

**12.** The optical module (100) of claim 11, wherein the controlling and calculating unit (150) is further configured to:
shut down the optical transmitting device (110) if the input optical power level (DDM_Rxp) is less than a threshold.

**13.** The optical module (100) of claim 11 or 12, wherein the controlling and calculating unit (150) is further configured to:

calculate a first difference (Diff1) between the input optical power level (DDM_Rxp) and the output optical power level (DDM_Txp1);
calculate a targeted output optical power level (DDM_Txp2) by the first difference (Diff1) and a receiving sensitivity ($Rxp_{sen}$);
calculate a second difference (Diff2) between the output optical power level (DDM_Txp1) and the targeted output optical power level (DDM_Txp2);
calculate the bias current ($\Delta I_{bias}$) by the second difference (Diff2); and
calculate the modulation current ($\Delta I_{mon}$) by the output optical power level (DDM_Txp1) and the targeted output optical power level (DDM_Txp2).

**14.** The optical module (100) of claim 13, wherein the controlling and calculating unit (150) is further configured to:
adjust the output optical power level (DDM_Txp1) to the targeted output optical power level (DDM_Txp2) by the bias current ($\Delta I_{bias}$) and the modulation current ($\Delta I_{mon}$).

**15.** The optical module (100) of any of claims 11 to 14, wherein the controlling and calculating unit (150) is further configured to:
determine whether the input optical power (Rxp) is greater than a receiving sensitivity ($Rxp_{sen}$).

optical module
100
signal processing unit
130
communication interface
140
optical receiving device 120
input optical power detecting unit
122
input optical power converting unit
124
optical transmitting device 110
output optical power detecting unit
112
output optical power converting unit
114
controlling and calculating unit
150
$I_{source}$
$I_{mpd}$
$I_{total}$
Rxp
Txp


Fig. 1

M
A
Detecting an input optical power and an output optical power
Determining whether the output optical power must be adjusted
No
Yes
Calculating a bias current and a modulation current
Adjusting the output optical power according to the bias current and the modulation current
A
S201
S202
S203
S204

Fig. 2

Europäisches
Patentamt
European
Patent Office
Office européen
des brevets

# EUROPEAN SEARCH REPORT

Application Number
EP 25 19 8262

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X<br>A | US 9 306 674 B1 (SANDSTROM LEIF J [US] ET AL) 5 April 2016 (2016-04-05)<br>* column 5, line 51 - column 14, line 54; figures 3,4,6,9 *<br>----- | 1-4,6, 9-12,15<br>5,7,8, 13,14 | INV.<br>H04B10/11<br>H04B10/564 |
| X | CN 116 865 852 A (CHINA TELECOM CORP LTD TECHNOLOGY INNOVATION CENTER ET AL.) 10 October 2023 (2023-10-10)<br>* paragraphs [0007] - [0010], [0133] - [0135] *<br>----- | 1,11 | |

TECHNICAL FIELDS SEARCHED (IPC)

H04B

The present search report has been drawn up for all claims

1

| Place of search | Date of completion of the search | Examiner |
|---|---|---|
| Munich | 13 January 2026 | Koch, Bernhard |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons
& : member of the same patent family, corresponding document

EPO FORM 1503 03.82 (P04C01)

## ANNEX TO THE EUROPEAN SEARCH REPORT ON EUROPEAN PATENT APPLICATION NO.

EP 25 19 8262

This annex lists the patent family members relating to the patent documents cited in the above-mentioned European search report. The members are as contained in the European Patent Office EDP file on
The European Patent Office is in no way liable for these particulars which are merely given for the purpose of information.

13-01-2026

| Patent document cited in search report | | Publication date | Patent family member(s) | | Publication date |
|---|---|---|---|---|---|
| US 9306674 | B1 | 05-04-2016 | US | 8948604 B1 | 03-02-2015 |
| | | | US | 9306674 B1 | 05-04-2016 |
| CN 116865852 | A | 10-10-2023 | NONE | | |

EPO FORM P0459

For more details about this annex : see Official Journal of the European Patent Office, No. 12/82